# EUROPÄISCHE PATENTSCHRIFT

(11) **EP 0 633 087 B1**
(45) Veröffentlichungstag und Bekanntmachung des Hinweises auf die Patenterteilung: **19.05.1999**
(21) Anmeldenummer: 94106315.8
(22) Anmeldetag: 22.04.1994
(51) Int. Cl.: B23D 61/02, B24D 3/06

(54) **Sägeblatt zum Sägen von duktilen Eisenwerkstoffen**
Sawblade for sawing ductile ferrous materials
Lame de scie pour scier les matériaux ferreux ductiles

(30) Priorität: 07.07.1993 DE 4322544
(43) Veröffentlichungstag der Anmeldung: 11.01.1995
(73) Patentinhaber: C. & E. FEIN GmbH & Co., D-70176 Stuttgart (DE)
(72) Erfinder:
(74) Vertreter: Gahlert, Stefan, Dr.-Ing.

(56) Entgegenhaltungen:
- EP-A- 0 004 449
- PATENT ABSTRACTS OF JAPAN vol. 15, no. 244 (M-1127) 24. Juni 1991 & JP-A-03 079 219 (NACHI FUJIKOSHI CORP) 4. April 1991

## Beschreibung

Die Erfindung betrifft ein Verfahren zum Sägen von Rohren aus Gußeisen gemäß dem Oberbegriff des Patentanspruchs 1.

Rohre, die der Wasserversorgung und der Abwasserentsorgung dienen, werden heutzutage meist aus Gußeisen hergestellt und zusätzlich mit einer Zementauskleidung versehen. Um die Korrosionsbeständigkeit zu verbessern, werden diese Rohre vielfach noch zusätzlich mit einer Schicht aus faserverstärktem Zement oder Beton von außen beschichtet. Bei dem Gußeisen handelt es sich in der Regel um Gußeisen mit Kugelgraphit (GGG), bei dem in einem meist vorwiegend ferritischem oder perlitischem Grundgefüge Kohlenstoff in Form von Kugelgraphit eingeschlossen ist.

Das Sägen derartiger Rohre, welche meist einen Durchmesser in der Größenordnung von etwa 15 bis zu etwa 40 cm und darüber aufweisen, ist ausgesprochen problematisch. Dabei muß insbesondere bei der Verlegung bzw. bei der Reparatur von Rohren vor Ort wegen beengter Verhältnisse häufig mit Stichsägen gearbeitet werden.

Herkömmliche Sägeblätter, welche mit Wolframkarbid beschichtet sind, weisen jedoch nur eine ungenügende Standzeit auf und verformen sich häufig schon beim Durchtrennen eines einzigen Rohres derart, daß ein Weiterarbeiten mit dem gleichen Sägeblatt nicht mehr möglich ist.

Auch diamantbeschichtete Sägeblätter sind ungeeignet, da sie infolge der im Grauguß enthaltenen Graphitteilchen zum Schmieren neigen, so daß die Schneidleistung unzureichend ist und sich die Sägeblätter infolge des hohen erforderlichen Anpreßdruckes schon nach kurzer Zeit verformen.

Der Sägevorgang wird zusätzlich noch dadurch erschwert, daß bei der Reparatur von Wasserrohrleitungen trotz einer vollständigen Wasserabsperrung weiterhin geringe Wassermengen durch die Rohre fließen, so daß naß gearbeitet werden muß, was zum Anbacken von Zement an der Schneide führt.

Es ist zwar grundsätzlich bekannt, diamantbeschichtete Sägeblätter und bornitridbeschichtete Sägeblätter zur Bearbeitung von hartem und sprödem Material, insbesondere zum Sägen von Gestein zu verwenden (Patent Abstracts of Japan, Vol. 15, No. 244 (M-1127), 24. Juni 1991 & JP-A-03079219 (Nachi Fujikochi Corp.), 4. April 1991; DE-A-3 433 729; US-A-4 883 500), jedoch werden derartige Sägen allgemein als ungeeignet zum Sägen von Rohren aus Gußeisen angesehen, da diamantbeschichtete Sägeblätter beim Sägen von duktilen Eisenwerkstoffen zum Schmieren neigen.

Der Erfindung liegt die Aufgabe zugrunde, ein Verfahren zum Sägen von duktilen Eisenwerkstoffen, insbesondere zum Sägen von Rohren aus Grauguß mit Zementauskleidung und/oder mit einer Außenbeschichtung aus faserverstärktem Zement oder Beton zu schaffen, mit dem eine hohe Schneidleistung und eine möglichst hohe Lebensdauer der Sägeblätter erzielbar ist.

Erfindungsgemäß wird diese Aufgabe dadurch gelöst, daß ein Sägeblatt mit einem Grundkörper verwendet wird, auf den mittels einer metallischen Bindeschicht gebundene Bornitridpartikel aufgebracht sind.

Bei der Verwendung derartiger Sägeblätter, ergibt sich eine erheblich verbesserte Schneidleistung und eine stark vergrößerte Standzeit.

Da herkömmliche diamantbeschichtete Sägeblätter ungeeignet sind, ist dieses Ergebnis infolge der strukturellen Ähnlichkeit von Bornitrid und Diamant ausgesprochen überraschend.

Die Verwendung von Sägeblättern mit Bornitridpartikeln führt beim Sägen von GGG-Gußrohren mit Zementauskleidung und faserverstärkter Zement-Außenhülle sogar im besonders problematischen Durchmesserbereich von etwa 20 cm zu stark verbesserten Schneidergebnissen, wobei einerseits die Schneidleistung stark erhöht ist, und andererseits die Standzeit erheblich verbessert ist. Überraschenderweise ergibt sich auch beim Sphäroguß mit kugelförmigen Graphiteinschlüssen kein Schmieren. Des weiteren wird auch beim Sägen von nassen Gußrohren ein Anbacken von Zementresten aus der Zementauskleidung oder dem Außenmantel am Sägeblatt vermieden.

In vorteilhafter Weiterbildung der Erfindung ist vorgesehen, daß die Bindeschicht aus Nickel oder einer Nickellegierung besteht.

Diese Maßnahme hat den Vorteil, daß eine derartige Bindeschicht eine besondere hohe Zähigkeit und Härte besitzt.

Die Bindeschicht kann in vorteilhafter Weise auf galvanischem Wege kathodisch/anodisch oder auf naßchemischem Wege erzeugt werden.

Dabei hat die galvanische Herstellung der Bindeschicht den Vorteil einer besonders guten Haftung und Reproduzierbarkeit; auch ist die Herstellung relativ preisgünstig.

Grundsätzlich wäre natürlich auch eine Herstellung auf anderem Wege, z.B. durch Flammspritzen denkbar, doch ist ein derartiges Verfahren in der Regel erheblich teurer.

Bei der Verwendung von Nickel oder einer Nickellegierung als Bindeschicht läßt sich die Härte in vorteilhafter Weise auf eine Vickershärte von mindestens 400 HV einstellen.

Besonders bevorzugt ist eine Härte von mindestens 500 HV, wobei sich optimale Ergebnisse mit einer galvanisch abgeschiedenen Bindeschicht aus Nickel mit einer Vickershärte von etwa 550 bis 650 HV ergeben.

In vorteilhafter Weiterbildung der Erfindung ist vorgesehen, daß die Bornitridpartikel eine Partikelgröße von etwa 0,3 bis 1 mm aufweisen, wobei eine Partikelgröße von 0,5 bis 0,8 mm, insbesondere von 0,6 bis 0,7 mm, besonders bevorzugt ist.

Bei der Verwendung von derartigen groben Bornitridpartikeln ergeben sich insbesondere in Verbindung mit der Bindeschicht aus Nickel oder einer Nickellegierung besonders im zuvor erwähnten Härtebereich optimale Schneidergebnisse bei der Verwendung als Stichsägeblätter zum Sägen von Rohren aus Gußeisen mit Zementauskleidung und faserverstärktem Zementmantel.

Der Grundkörper kann dabei aus einem Werkzeugstahl oder einem anderen Material bestehen.

Sowohl gerade als auch gezahnte Sägeblätter führen insbesondere bei der Verwendung als Stichsägeblätter zu gleichermaßen guten Ergebnissen.

Daneben kann erfindungsgemäß auch vorteilhaft mit Kreissägeblättern gearbeitet werden.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachstehend an Hand bevorzugter Ausführungsbeispiele unter Bezugnahme auf die Zeichnung näher erläutert. Darin zeigen:
- Fig. 1: einen Abschnitt eines Sägeblattes für das erfindungsgemäße Verfahren in schematischer Darstellung;
- Fig. 2: einen Ausschnitt des Sägeblattes gemäß Fig. 1 in vergrößerter schematischer Darstellung (nicht maßstabsgerecht) und
- Fig. 3: einen Abschnitt eines gegenüber Fig. 1 leicht abgewandelten Sägeblattes, welches mit Zähnen bestückt ist.

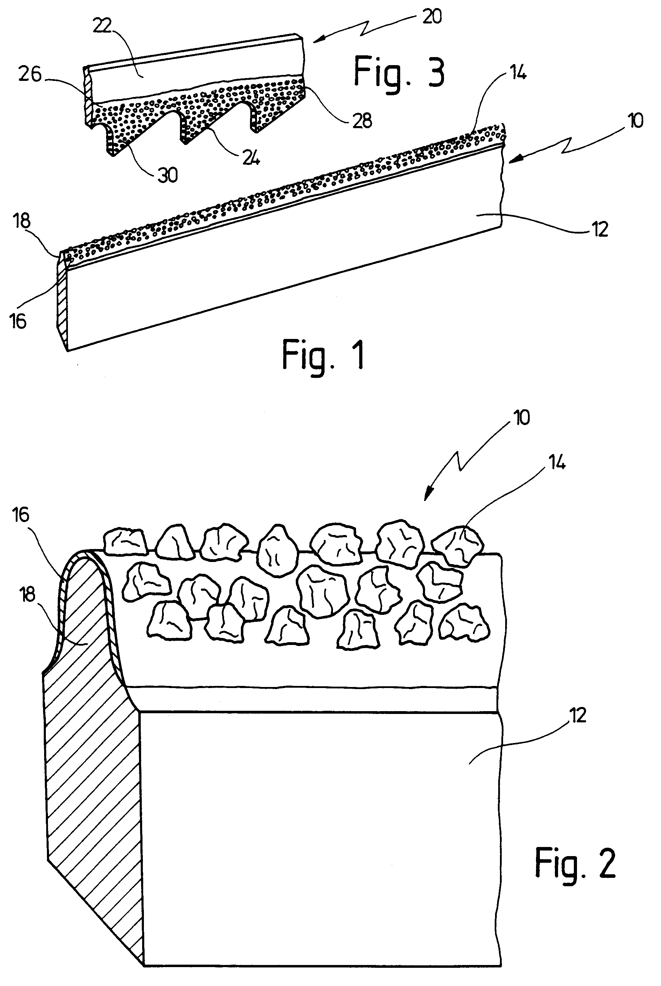

Ein Sägeblatt für das erfindungsgemäße Verfahren ist in den Fig. 1 und 2 insgesamt mit Ziffer 10 bezeichnet.

Das Sägeblatt 10 weist einen langgestreckten Grundkörper 12 aus einem Werkzeugstahl auf, welcher in seinem Schneidbereich 18, der im dargestellten Beispiel gegenüber dem übrigen Bereich des Grundkörpers 12 etwas verjüngt ist, mit Bornitridpartikeln 14 beschichtet ist.

Der Schneidbereich 18 weist dabei eine Stärke von etwa 2 bis 2,5 mm auf, was den Vorteil hat, daß das Sägeblatt ausreichend breit ist, so daß beim Sägen großer Rohre mit Keilen gearbeitet werden kann, so daß ein Verklemmen des Sägeblattes vermieden wird.

Die Bornitridpartikel 14, welche aus kubischem Bornitrid bestehen, weisen eine Partikelgröße von etwa 0,6 bis 0,7 mm auf, was zu besonders guten Schneidergebnissen beim Sägen von GGG-Gußeisenrohren mit Zementauskleidung und faserverstärkter Zementbeschichtung führt.

Die Bornitridpartikel 14 sind durch eine Bindeschicht, welche in Fig. 2 schematisch mit der Ziffer 16 angedeutet ist, auf dem Schneidbereich 18 des Grundkörpers 12 gehalten.

Diese Bindeschicht 16 besteht aus einer Nickelschicht, welche galvanisch (anodisch/kathodisch) mit einer Härte von etwa 600 bis 700 HV abgeschieden wurde.

Die Bornitridpartikel 14 ragen dabei entsprechend der Stärke der Bindeschicht 16 mit etwa 30 bis 50 % ihres Durchmessers aus der Bindeschicht heraus. Die Darstellung gemäß Fig. 2 dient lediglich der Erläuterung und ist nicht maßstabsgerecht, da die Bornitridpartikel 14 zum Zwecke der besseren Erkennbarkeit vergrößert dargestellt wurden.

In Fig. 3 ist eine alternative Ausführung eines Sägeblattes für das erfindungsgemäße Verfahren insgesamt mit der Ziffer 20 bezeichnet. Auch hierbei ist ein Grundkörper 22 aus einem Werkzeugstahl in seinem Schneidbereich 28 mit Bornitridpartikeln 24 beschichtet, welche mit Hilfe einer galvanisch abgeschiedenen Bindeschicht aus Nickel mit einer Vickershärte von etwa 600 bis 700 HV gebunden sind.

Der Schneidbereich 28 ist im Gegensatz der zuvor beschriebenen Ausführung jedoch nicht gerade ausgebildet, sondern weist Zähne auf, welche mit der Ziffer 30 angedeutet sind.

## Patentansprüche

1. Verfahren zum Sägen von Rohren aus Gußeisen mit zumindest einer Zementauskleidung oder einem faserverstärkten Zementmantel oder einem Betonmantel, dadurch gekennzeichnet, daß ein Sägeblatt (10, 20) mit einem Grundkörper (12, 22) verwendet wird, auf den Bornitridpartikel (14, 24) mittels einer metallischen Bindeschicht (16, 26) aufgebracht sind.

2. Verfahren nach Anspruch 1, dadurch gekennzeichnet, daß ein Sägeblatt verwendet wird, bei dem die Bindeschicht (16, 26) aus Nickel oder einer Nickellegierung besteht.

3. Verfahren nach Anspruch 1 oder 2, dadurch gekennzeichnet, daß ein Sägeblatt verwendet wird, bei dem die Bindeschicht (16, 26) galvanisch abgeschieden ist.

4. Verfahren nach Anspruch 3, dadurch gekennzeichnet, daß ein Sägeblatt verwendet wird, bei dem die Bindeschicht (16, 26) kathodisch/anodisch oder naßchemisch abgeschieden ist.

5. Verfahren nach einem oder mehreren der Ansprüche 2 bis 4, dadurch gekennzeichnet, daß ein Sägeblatt verwendet wird, bei dem die Bindeschicht (16, 26) eine Vickershärte von mindestens 400 HV aufweist.

6. Verfahren nach Anspruch 5, dadurch gekennzeichnet, daß ein Sägeblatt verwendet wird, bei dem die Bindeschicht (16, 26) eine Vickershärte von mindestens 500 HV aufweist.

7. Verfahren nach Anspruch 6, dadurch gekennzeichnet, daß ein Sägeblatt verwendet wird, bei dem die Bindeschicht (16, 26) eine Vickershärte von etwa 550 bis 650 HV aufweist.

8. Verfahren nach einem oder mehreren der vorhergehenden Ansprüche, dadurch gekennzeichnet, daß ein Sägeblatt verwendet wird, bei dem die Bornitridpartikel (14, 24) eine Partikelgröße von etwa 0,3 bis 1,0 mm aufweisen.

9. Verfahren nach Anspruch 8, dadurch gekennzeichnet, daß ein Sägeblatt verwendet wird, bei dem die Bornitridpartikel (14, 24) eine Partikelgröße von etwa 0,5 bis 0,8 mm aufweisen.

10. Verfahren nach Anspruch 9, dadurch gekennzeichnet, daß ein Sägeblatt verwendet wird, bei dem die Bornitridpartikel (14, 24) eine Partikelgröße von etwa 0,6 bis 0,7 mm aufweisen.

## Claims

1. A method for sawing pipes made of cast iron with at least a cement lining or an outer jacket made of fiber-reinforced cement or concrete, characterized in that a saw blade (10, 20) is utilized having a basic body (12, 22) onto which boron nitride particles (14, 24) are bonded by means of a metallic bonding layer (16, 26).

2. The method of claim 1, characterized in that a saw blade is utilized, wherein the bonding layer (16, 26) is made of nickel or a nickel alloy.

3. The method of claim 1 or 2, characterized in that a saw blade is utilized, wherein the bonding layer (16, 26) is galvanically deposited.

4. The method of claim 3, characterized in that a saw blade is utilized, wherein the bonding layer (16, 26) is deposited cathodically/anodically or wet chemically.

5. The method of any one of claims 2 through 4, characterized in that a saw blade is utilized, wherein the bonding layer (16, 26) possesses a Vickers hardness of at least 400 HV.

6. The method of claim 5, characterized in that a saw blade is utilized, wherein the bonding layer (16, 26) possesses a Vickers hardness of at least 500 HV.

7. The method of claim 6, characterized in that a saw blade is utilized, wherein the bonding layer (16, 26) possesses a Vickers hardness of approximately 550 to 650 HV.

8. The method of any one of the preceding claims, characterized in that a saw blade is utilized, wherein the boron nitride particles (14, 24) possess a particle size of approximately 0.3 to 1.0 mm.

9. The method of claim 8, characterized in that a saw blade is utilized, wherein the boron nitride particles (14, 24) possess a particle size of approximately 0.5 to 0.8 mm.

10. The method of claim 9, characterized in that a saw blade is utilized, wherein the boron nitride particles (14, 24) possess a particle size of approximately 0.6 to 0.7 mm.

## Revendications

1. Procédé de sciage de tuyaux en fonte présentant au moins un revêtement en ciment ou une enveloppe en ciment renforcé par des fibres ou une enveloppe en béton, caractérisé en ce qu'est utilisée une lame de scie (10, 20) présentant un corps de base (12, 22), sur lequel sont appliquées des particules de nitrure de bore (14, 24) au moyen d'une couche de liaison (16, 26) métallique.

2. Procédé selon la revendication 1, caractérisé en ce qu'est utilisée une lame de scie pour laquelle la couche de liaison (16, 26) est constituée en nickel ou en un alliage de nickel.

3. Procédé selon la revendication 1 ou 2, caractérisé en ce qu'est utilisée une lame de scie pour laquelle la couche de liaison (16, 26) est déposée par galvanisation.

4. Procédé selon la revendication 3, caractérisé en ce qu'est utilisée une lame de scie, pour laquelle la couche de liaison (16, 26) est déposée de façon cathodique/anodique ou selon un procédé chimique par voie humide.

5. Procédé selon l'une ou plusieurs des revendications 2 à 4, caractérisé en ce qu'est utilisée une lame de scie pour laquelle la couche de liaison (16, 26) présente une dureté Vickers d'au moins 400 HV.

6. Procédé selon la revendication 5, caractérisé en ce qu'est utilisée une lame de scie pour laquelle la couche de liaison (16, 26) présente une dureté Vickers d'au moins 500 HV.

7. Procédé selon la revendication 6, caractérisé en ce qu'est utilisée une lame de scie pour laquelle la couche de liaison (16, 26) présente une dureté Vickers comprise entre approximativement 550 et 650 HV.

8. Procédé selon l'une ou plusieurs des revendications précédentes, caractérisé en ce qu'est utilisée une lame de scie dans laquelle les particules de nitrure de bore (14, 24) présentent une taille comprise entre approximativement 0,3 et 1,0 mm.

9. Procédé selon la revendication 8, caractérisé en ce qu'est utilisée une lame de scie dans laquelle les particules de nitrure de bore (14, 24) présentent une taille comprise entre approximativement 0,5 et 0,8 mm.

10. Procédé selon la revendication 9, caractérisé en ce qu'est utilisée une lame de scie dans laquelle les particules de nitrure de bore (14, 24) présentent une taille comprise entre approximativement 0,6 et 0,7 mm.
